(19)

Europäisches Patentamt

European Patent Office

Office européen des brevets

(11) EP 1 142 636 A1

(12) EUROPEAN PATENT APPLICATION
published in accordance with Art. 158(3) EPC

(43) Date of publication:
10.10.2001 Bulletin 2001/41

(51) Int Cl.⁷: B01J 27/053, C10G 69/08,
C10G 35/085, C10G 45/10

(21) Application number: 99959863.4

(22) Date of filing: 16.12.1999

(86) International application number:
PCT/JP99/07082

(87) International publication number:
WO 00/35581 (22.06.2000 Gazette 2000/25)

(84) Designated Contracting States:
AT BE CH CY DE DK ES FI FR GB GR IE IT LI LU
MC NL PT SE

(30) Priority: 17.12.1998 JP 35973498
17.12.1998 JP 35973598
15.11.1999 JP 32424299
15.11.1999 JP 32424399

(71) Applicants:
• Petroleum Energy Center
  Tokyo 105-0001 (JP)
• COSMO OIL CO., LTD
  Tokyo 105-0023 (JP)

(72) Inventors:
• IMURA, Takao, Cosmo Oil Co., Ltd.,
  Satte-shi, Saitama 340-0112 (JP)
• OHSHIO, Nobuyasu, Cosmo Oil Co., Ltd.,
  Satte-shi, Saitama 340-0112 (JP)
• KAWAMURA, Takahiro, Cosmo Oil Co., Ltd.,
  Satte-shi, Saitama 340-0112 (JP)
• HAGIWARA, Kazuhiko, Cosmo Oil Co., Ltd.,
  Satte-shi, Saitama 340-0112 (JP)

(74) Representative: HOFFMANN - EITLE
Patent- und Rechtsanwälte
Arabellastrasse 4
81925 München (DE)

(54) CATALYST FOR HYDRODESULFURIZATION ISOMERIZATION OF LIGHT HYDROCARBON OIL, METHOD FOR PREPARATION THEREOF, AND METHOD FOR HYDRODESULFURIZATION ISOMERIZATION OF LIGHT HYDROCARBON OIL USING THE CATALYST

(57) A catalyst for the hydrodesulfurization and isomerization of a light hydrocarbon oil, comprising a support comprising zirconium oxide or a zirconium hydroxide, from 1 to 3 wt% sulfuric acid radicals in terms of sulfur amount based on the total weight of the catalyst composition, and (I) from 0.05 to 10 wt% palladium, (II) from 0.05 to 10 wt% palladium and from 0.05 to 10 wt% platinum, or (III) from 0.05 to 10 wt% nickel based on the total weight of the catalyst composition, and having a specific surface area of from 50 to 150 m²/g after stabilization by burning at a temperature of from 550 to 800°C; a process for producing the catalyst; and a method for the hydrodesulfurization and isomerization of a light hydrocarbon oil with the catalyst.

EP 1 142 636 A1

**Description**

TECHNICAL FILED

The present invention relates to a catalyst for the hydrodesulfurization and isomerization of a light hydrocarbon oil, a process for producing the catalyst, and a method for the hydrodesulfurization and isomerization of a light hydrocarbon oil with the catalyst. More particularly, the present invention relates to a catalyst for light-hydrocarbon-oil hydrodesulfurization and isomerization with which the hydrodesulfurization and isomerization of a light hydrocarbon oil containing organosulfur compounds can be attained simultaneously and which can be used in simpler facilities than in conventional techniques and is economical, and to a process for producing the catalyst and a method for the hydrodesulfurization and isomerization of a light hydrocarbon oil with the catalyst.

BACKGROUND ART

The isomerization of a light hydrocarbon oil is a technique which has conventionally been employed extensively in the field of petroleum refining industry and petrochemical industry. With the trend toward engine performance elevation in motor vehicles and aircraft especially in recent years, the gasolines for use as fuels therein have come to be required to have a high octane number and isomerization is becoming important for satisfying the requirement. The so-called isomerized gasolines have hitherto been used which are obtained by isomerizing a light naphtha, which is a light hydrocarbon oil, as one of light substrates for gasolines so as to have an improved octane number.
Many researches have conventionally been conducted on methods for isomerizing light hydrocarbon oils, and various catalysts for use in isomerization reactions are known. The most useful of these isomerization catalysts include solid acid catalysts. Processes for producing a solid acid catalyst and methods of isomerization with it are disclosed, for example, in JP-A-5-29503 and JP-A-6-29199.
However, light hydrocarbon oils such as light naphthas, which are untreated fractions obtained by distillation of a crude oil, usually contain organosulfur compounds in an amount of about from 500 to 700 ppm and these organosulfur compounds function as a catalyst poison for solid acid catalysts. Because of this, direct isomerization of a light naphtha has not been a process suitable for industrial use from the standpoint of catalyst life. In processes which are presently being carried out, a two-stage operation is conducted in which: a light naphtha is first treated with a hydrodesulfurization catalyst such as $Co\text{-}Mo/Al_2O_3$ to convert organosulfur compounds into hydrogen sulfide and this hydrogen sulfide is separated from the product oil to thereby obtain a desulfurized light naphtha having a sulfur content reduced to several ppm or lower; and thereafter this desulfurized light naphtha is used as a feedstock oil to be isomerized. Namely, in the current processes for the isomerization of a light hydrocarbon oil, the step of hydrodesulfurization is indispensable as a pretreatment for the step of isomerization.
If a catalyst for use in the isomerization of a light hydrocarbon oil can be replaced with a catalyst capable of simultaneously attaining hydrodesulfurization and isomerization, the hydrodesulfurization step which has been indispensable to isomerization processes can be omitted, making it possible to conduct the isomerization more economically with simpler facilities than in conventional techniques. Specifically, it is desirable to enable hydrodesulfurization and isomerization reactions to be conducted simultaneously by packing an isomerization catalyst having sulfur resistance into an existing reaction column for the isomerization of a light hydrocarbon oil and feeding a light hydrocarbon oil containing organosulfur compounds as a feedstock oil to be isomerized.

DISCLOSURE OF THE INVENTION

An object of the present invention is to provide a catalyst with which the desulfurization and isomerization of a light hydrocarbon oil containing organosulfur compounds can be simultaneously attained economically with simple facilities so as to take advantage of the above-described new finding reached by the present inventors. Another object is to provide a process suitable for producing the catalyst.
The present inventors made investigations in order to meet such a desire. As a result, they have found that a certain kind of solid acid catalyst has activity not only in hydrocarbon isomerization but in the desulfurization of organosulfur compounds and is useful as an isomerization catalyst having excellent sulfur resistance.
The present invention relates to a catalyst composition for the hydrodesulfurization and isomerization of a light hydrocarbon oil, comprising a support comprising zirconium oxide or a zirconium hydroxide, from 1 to 3 wt% sulfuric acid radicals in terms of sulfur amount based on the total weight of the catalyst composition, and (1) from 0.05 to 10 wt% palladium, (2) from 0.05 to 10 wt% palladium and from 0.05 to 10 wt% platinum, or (3) from 0.05 to 10 wt% nickel based on the total weight of the catalyst composition; and having a specific surface area of from 50 to 150 $m^2/$g after stabilization by burning at a temperature of from 550 to 800°C.
Furthermore, the present invention relates to a process for producing the catalyst composition described above, comprising:

(1) treating a zirconium hydroxide with a substance giving sulfuric acid radicals, impregnating the resultant treated material with a palladium compound, a palladium compound and a platinum compound, or a nickel compound, and burning the impregnated material at a temperature of from 550 to 800°C;
(2) treating a zirconium hydroxide with a substance giving sulfuric acid radicals, burning the treated material at a temperature of from 550 to 800°C, impregnating the resultant burned material with a palladium compound, a palladium compound and a platinum compound, or a nickel compound, and burning the impregnated material at a temperature of from 300 to 700°C;
(3) kneading a zirconium hydroxide, a substance giving sulfuric acid radicals, and a palladium compound, a palladium compound and a platinum compound, or a nickel compound and burning the mixture at a temperature of from 550 to 800°C; or
(4) kneading a zirconium hydroxide and a substance giving sulfuric acid radicals, burning the mixture at a temperature of from 550 to 800°C, impregnating the resultant burned material with a palladium compound, a palladium compound and a platinum compound, or a nickel compound, and burning the impregnated material at a temperature of from 300 to 700°C.

Moreover, the present invention relates to a method for the hydrodesulfurization and isomerization of a light hydrocarbon oil, comprising bringing a light hydrocarbon oil having a sulfur content of 700 ppm by weight or lower and hydrogen into contact with the catalyst composition described above under reaction conditions of a temperature of from 140 to 400°C, a pressure of from 1.0 to 4.5 MPa, an LHSV of from 1.0 to 10 $h^{-1}$, and an $H_2$/oil ratio of from 1 to 3 mol/mol.

BEST MODE FOR CARRYING OUT THE INVENTION

The present invention will be explained below in detail.
The catalyst composition of the present invention for the hydrodesulfurization and isomerization of a light hydrocarbon oil (hereinafter referred to as "catalyst of the present invention") contains sulfuric acid radicals in an amount of from 1 to 3 wt% in terms of sulfur amount incorporated in a support comprising zirconium oxide or a zirconium hydroxide, from 0.05 to 10 wt% palladium or nickel incorporated thereon, is heated for stabilization at a temperature of from 550 to 800°C, and has a specific surface area of from 50 to 150 $m^2$/g (hereinafter, the wt% for each component of the catalyst of the present invention means percent based on the total weight of the catalyst unless otherwise indicated).
Among the catalysts of the present invention, the catalyst containing palladium is useful also when it further contains from 0.05 to 10 wt% platinum incorporated thereon. In this case, the ratio of the platinum to the palladium (Pt/Pd atomic ratio) is preferably from 0.1 to 4.
A first embodiment of the catalyst of the present invention comprises zirconium oxide or a zirconium hydroxide as a support and from 1 to 3 wt% sulfuric acid radicals in terms of sulfur amount incorporated in the support, as described above, and further contains from 0.05 to 10 wt% palladium incorporated thereon. The amount of palladium incorporated is preferably from 0.1 to 5 wt%. If the amount of palladium incorporated is less than 0.05 wt%, desulfurization activity is not exhibited. On the other hand, if it is larger than 10 wt%, the dispersibility of palladium may be deteriorated and thus the activity may be reduced.
A second embodiment of the catalyst of the present invention comprises the palladium-containing catalyst to which platinum has been added and has enhanced isomerization activity. If the amount of platinum added in this embodiment is less than 0.05 wt%, the addition of platinum produces no effects. On the other hand, if it is larger than 10 wt%, the dispersibility of platinum may be deteriorated and thus the isomerization activity may be reduced. When platinum is added to the palladium, the ratio between the two elements present (Pt/Pd atomic ratio) is preferably from 0.1 to 4. The more preferred range thereof is Pt/Pd = 0.15 to 2.
A third embodiment of the catalyst of the present invention is the same as the first embodiment, except that it contains nickel, in place of the palladium, incorporated into the support in an amount of from 0.05 to 10 wt%. If the amount of nickel incorporated is less than 0.05 wt%, activity is not exhibited because of the too small nickel amount as in the case of the catalyst having incorporated palladium. In contrast, if the amount of nickel incorporated is larger than 10 wt%, the nickel has impaired dispersibility and is present as metal particles having an increased particle diameter and this may reduce rather than increase the activity. The preferred range of the amount of nickel incorporated is from 0.1 to 5 wt%.
The amount of sulfuric acid radicals ($SO_4$) to be imparted to the support is from 1 to 3 wt%, preferably from 1.5 to 2 wt%, in terms of sulfur (S) amount. If the amount of sulfuric acid radicals is smaller than 1 wt% in terms of sulfur amount, the catalyst has a low acidity and is hence low in acidity as a superstrong solid acid, so that it has insufficient catalytic activity in isomerization. If it is larger than 3%, sulfuric acid radicals excessively cover the surface of the zirconia and stack up thereon to thereby deactivate active sites, resulting in reduced activity.

Examples of the zirconium hydroxide include $Zr(OH)_4$, $Zr(OH)_2$, $Zr(OH)_3$, and the like, which are generally represented by zirconium oxide hydrates, $ZrO_2 \cdot xH_2O$ (wherein $0 < x \leq 2$).

In the case of a support consisting of zirconium oxide ($ZrO_2$), tetragonal crystals and monoclinic crystals are present in the crystal structures thereof according to X-ray diffraction analysis. The crystals useful for a catalyst support are tetragonal crystals, and a high ratio of monoclinic structures results in reduced catalytic activity. The ratio of monoclinic structures to tetragonal structures present in the zirconium oxide is determined by examining the catalyst for X-ray diffraction peaks, determining the ratio of the integrated intensity for the X-ray diffraction peak with $CuK_\alpha$ line at $2\theta = 28.2$ (main peak for monoclinic structures) to that at $2\theta = 30.2$ (main peak for tetragonal structures), and taking this ratio as that ratio. When the ratio of monoclinic structures to tetragonal structures present in the zirconium oxide is thus calculated, the value thereof is preferably such that (monoclinic crystals)/(tetragonal crystals) is in the range of from 20/80 to 0/100. The more preferred range thereof is from 10/90 to 0/100.

The catalyst of the present invention, after having been stabilized through burning at 550 to 800°C, should have a specific surface area of from 50 to 150 $m^2$/g as measured by the BET method. In general, the specific surface area of a catalyst tends to become smaller with increasing burning temperature and period, while it tends to become larger with reducing burning temperature and period. If the specific surface area is less than 50 $m^2$/g, the metal incorporated has poor dispersibility, resulting in a limited number of active sites for hydrogenation and isomerization. In addition, such too small specific surface areas are undesirable in that the ratio of monoclinic crystals to tetragonal crystals in the crystal structures of the zirconium oxide tends to exceeds 20/80. Furthermore, it is difficult to secure a sulfuric acid radical content in the catalyst of 1 wt% or higher in terms of sulfur content and, as a result, the solid acid cannot have superstrong acidity. On the other hand, catalysts having a specific surface area larger than 150 $m^2$/g have reduced activity in hydrodesulfurization and isomerization because the zirconium oxide has undergone insufficient crystallization through burning and the ratio of tetragonal zirconium oxide structures therein is low.

Processes for producing the catalyst of the present invention are not particularly limited, and the impartation of sulfuric acid radicals and the deposition of palladium, platinum, or nickel may be conducted by any desired method and in any desired order. However, production processes such as those shown below are preferred.

A first production process comprises treating a zirconium hydroxide with a substance giving sulfuric acid radicals; impregnating the resultant treated material with a palladium compound, a palladium compound and a platinum compound, or a nickel compound; and burning the impregnated material at a temperature of from 550 to 800°C.

A second production process comprises treating a zirconium hydroxide with a substance giving sulfuric acid radicals; burning the treated material at a temperature of from 550 to 800°C; impregnating the resultant burned material with a palladium compound, a palladium compound and a platinum compound, or a nickel compound; and then burning it again at a temperature of from 300 to 700°C, preferably from 500 to 600°C.

A third production process comprises kneading a zirconium hydroxide, a substance giving sulfuric acid radicals, and a palladium compound, a palladium compound and a platinum compound, or a nickel compound; and burning the mixture at a temperature of from 550 to 800°C.

A fourth production process comprises kneading a zirconium hydroxide and a substance giving sulfuric acid radicals; burning the mixture at a temperature of from 550 to 800°C; impregnating the resultant burned material with a palladium compound, a palladium compound and a platinum compound, or a nickel compound; and then burning it again at a temperature of from 300 to 700°C, preferably from 500 to 600°C.

The "substance giving sulfuric acid radicals" is not particularly limited as long as it is a substance capable of giving sulfuric acid radicals to the support which is either zirconium oxide or a zirconium hydroxide. Specific examples are 0.1 to 5 N sulfuric acid, aqueous ammonium sulfate solutions having a molar concentration of from 0.1 to 10, and the like. When these aqueous solutions are used, the substance giving sulfuric acid radicals is used in an amount of from 1 to 10 times by weight the amount of the support.

Methods for imparting sulfuric acid radicals are not limited to the above-described method in which a liquid substance giving sulfuric acid radicals is employed, and a method in which a solid substance giving sulfuric acid radicals, such as ammonium sulfate or the like, is kneaded together with a support can also be used. The latter method can bring about the same effect through stabilization by burning. As a means for kneading, any kneader generally used for catalyst production can be used. In the kneading, an appropriate liquid is added, such as water, ethanol, isopropanol, acetone, methyl ethyl ketone, diethyl ketone, methyl isobutyl ketone, or the like. There are no particular limitations on the sequence of introduction of a support material, a substance giving sulfuric acid radicals, and a liquid into a kneader. The temperature for and period of kneading also are not particularly limited as long as catalyst performance is not influenced thereby. In the kneading, the substance giving sulfuric acid radicals is used in an amount of generally from 1 to 10 wt% in terms of sulfur amount based on the support.

Besides those methods, a method comprising using a substance giving sulfuric acid radicals, such as hydrogen sulfide or sulfurous acid gas, to impart sulfuric acid radicals after a stabilization treatment with burning can produce the same effect.

A specific method for depositing a metal on a catalyst is an impregnation method, which, in the case of palladium as an example of the metal, comprises immersing a support in an aqueous solution of the chloride, sulfate, or nitrate of palladium, a tetraammine palladium complex, or the like, taking out the support, and drying it. Besides being conducted by immersion in an aqueous solution, metal deposition can be attained by a technique in which the chloride, sulfate, or nitrate of the metal to be incorporated or the like is mixed with a support during the kneading of the support and a substance giving sulfuric acid radicals.

Burning is conducted mainly for the purpose of stabilizing the support. It is accomplished by heating at a temperature of from 550 to 800°C, preferably from 600 to 750°C, for from 0.5 to 10 hours, in an oxidizing atmosphere. Through the burning, most of the zirconium hydroxide changes into zirconium oxide. If the burning temperature is less than 550°C, the resultant zirconium compounds contain a large ratio of zirconium hydroxides and a small ratio of tetragonal zirconium oxide, so that the burned material does not have the nature of a solid acid and the catalyst does not have activity in hydrodesulfurization and isomerization. On the other hand, high-temperature burning results in a diminution of zirconium hydroxides. However, temperatures more than 800°C are undesirable for catalytic activity because burning at such high temperatures results in an increased ratio of monoclinic zirconium oxide. In addition, since elimination of sulfuric acid radicals also proceeds, the resultant catalyst has a sulfur content less than 1 wt% and a reduced solid-acid strength. Furthermore, sintering of the incorporated metal, e.g., palladium, also occurs, resulting in reduced activity in hydrodesulfurization and isomerization. Incidentally, if a catalyst is burned in a reducing atmosphere, the bonded state of the sulfuric acid radicals on the metal or metal. oxide, such as palladium or the like, changes or the sulfuric acid radicals are diminished probably due to reductional decomposition, resulting in reduced catalytic activity.

Burning may be conducted either before or after metal deposition. Even if burning is conducted before metal deposition, the burning for stabilization is carried out under such conditions as to yield zirconium oxide of a tetragonal structure. As stated hereinabove, such conditions include a temperature of from 550 to 800°C, preferably from 600 to 750°C, for 0.5 to 10 hours. When burning is conducted before metal deposition, it is preferred to activate the catalyst after the metal deposition by further burning it again by heating at from 300 to 700°C, preferably from 500 to 600°C. Preferred temperatures for this burning to be conducted for catalyst activation vary depending on the decomposition temperature of the metal to be incorporated, more specifically, of the metal compound infiltrated (virtually, the temperature at which the metal becomes an oxide). For example, a temperature around 600°C is necessary in the case of impregnation with $PdCl_2$, and a temperature slightly higher than 300°C is sufficient in the case of impregnation with $Pd(NH_4)_3Cl_2$.

The catalyst of the present invention becomes usable through the burning described above, i.e., the heat treatment for support stabilization, or through the burning and the subsequent heat treatment for catalyst activation conducted in a lower-temperature range. However, from the standpoint of stably obtaining catalytic activity, the catalyst is preferably subjected to a pretreatment for activity stabilization before being used in desulfurization and isomerization. The pretreatment comprises first drying the catalyst by keeping it at a temperature of from 100 to 500°C for from 1 to 5 hours, and then reducing the catalyst at a temperature of from 100 to 400°C.

The catalyst of the present invention obtained can be used as a mixture with alumina, silica-alumina, silica, boria, titania, active carbon, or the like, if necessary. There are no particular limitations on catalyst shape, and various shapes ordinarily used for this kind of catalyst can be employed, such as cylindrical and four-cusped shapes and the like, obtained by punching or extrusion molding.

Suitable for use as the feedstock oil to be desulfurized and simultaneously isomerized with the catalyst of the present invention is a light hydrocarbon oil containing organosulfur, such as a light naphtha taken through distillation from a crude-oil topping plant, a light naphtha separated from a whole naphtha likewise taken through distillation from a crude-oil topping plant, or a Merox naphtha obtained by subjecting a light naphtha to the Merox treatment. An especially suitable feedstock oil is a light naphtha having an ASTM (American Society for Testing and Materials) distillation temperature of from 25 to 130°C, preferably from 25 to 110°C. With respect to the content of organosulfur, a light naphtha suitable for that use is one in which the content thereof is more than 0 ppm by weight and 700 ppm by weight or less, preferably about from 10 to 500 ppm by weight, and more preferably about from 10 to 200 ppm by weight. Specific examples of the organosulfur compounds contained in light naphthas include thiol compounds (R-SH), such as 2-propanethiol, $(CH_2)_2CH-SH$, and ethanethiol, $C_2H_5-SH$; sulfide compounds (R-S-R), such as methyl ethyl sulfide, $CH_3-S-C_2H_5$; disulfide compounds (R-SS-R), such as ethyl isopropyl disulfide, $C_2H_5-SS-CH(CH_3)_2$, and the like. Using the catalyst of the present invention, these sulfur compounds undergo hydrogenolysis simultaneously with feedstock oil isomerization so that desulfurization can be conducted.

From the standpoint of maintaining the catalytic activity over a longer period, it is preferred to use a light naphtha in which the amount of aromatics, unsaturated hydrocarbons, and higher hydrocarbons is small. The amount of benzene is 5 vol% or less, or 3 vol% or less if possible, that of naphthenes is 12 vol% or less, or 9 vol% or less if possible, and that of $C_7$ compounds is 15 vol% or less, or 10 vol% or less if possible.

Reaction conditions for the desulfurization and isomerization are as follows.

Reaction temperature:

140-400°C, preferably 160-300°C, more preferably 180-220°C

Reaction pressure:

1.0-4.5 MPa, preferably 1.4-3.5 MPa

LHSV:

1.0-10 h$^{-1}$, preferably 1.0-5 h$^{-1}$

$H_2$/oil ratio:

1-3 mol/mol, preferably 1.5-2.5 mol/mol
when the reaction temperature is less than 140°C, a catalyst life is shortened. On the other hand, if it is more than 400°C, the sulfuric acid radicals which have imparted superstrong acidity to the solid acid are reduced and decomposed by hydrogen to reduce the acid strength of the catalyst and, as a result, both hydrodesulfurization and isomerization reaction come not to proceed. The other conditions, i.e., reaction pressure, LHSV, and $H_2$/oil ratio, are almost the same as in the conditions for the conventional isomerization reaction of light hydrocarbon oils.
The catalyst of the present invention can be used as a hydrodesulfurization isomerization catalyst in place of conventional isomerization catalysts. Namely, direct isomerization can be conducted simultaneously with desulfurization in which organosulfur compounds contained in the light hydrocarbon oil are converted through hydrodesulfurization into hydrogen sulfide to reduce the sulfur content to several ppm or lower. Thus, a product oil having an improved octane number can be obtained in one step.
The catalyst of the present invention exhibits a performance of 60% or more in terms of "degree of thiophene desulfurization" calculated from a reaction test conducted under the following conditions.

Reactant:

Thiophene-containing n-hexane (sulfur content: 500 ppm by weight)

Reaction conditions:

Reaction temperature: 200°C
Reaction pressure: 1.0 MPa
LHSV: 5 h$^{-1}$
$H_2$/oil ratio: 1 mol/mol

Degree of thiophene desulfurization:

The product oil yielded in the period of from 4 to 5 hours after initiation of the reaction is collected with a high-pressure separator (cooled at -50°C). Five milliliters of the product oil collected is mixed with 5 mL of an aqueous $NaHCO_3$ solution (concentration: 0.6 mol/L) and the mixture is stirred for 30 seconds or more. Thereafter, the supernatant is collected and examined for sulfur amount according to the "Sulfur Content Testing Method for Crude Oils and Petroleum Products/Microcoulometric Titration Type Oxidation Method" as provided for in JIS K 2541.

$$\text{Degree of thiophene desulfurization (\%)}$$

$$= \text{(sulfur amount in feedstock oil - sulfur amount}$$

$$\text{in reaction product oil) / (sulfur amount in}$$

$$\text{feedstock oil)} \times 100$$

The present invention will be explained in more detail by means of Production Examples and Example. However, the present invention should not be construed as being limited to these Examples in any way.

The following catalysts A to M (Production Examples) and catalyst N (Comparative Example) were produced. Catalysts A to J, M, and N were produced through a procedure comprising preparing a zirconia hydroxide containing sulfuric acid radicals in the manner described under (1) and (2) in Production Example 1, impregnating the zirconium hydroxide with aqueous solutions of various palladium salts (platinum salts or nickel salts), drying the impregnated zirconium hydroxide, and burning it. Catalysts K and L were produced through a procedure comprising preparing a zirconia hydroxide in the manner described under (1) in Production Example 1 and likewise conducting the subsequent steps of impregnation with aqueous solutions of various palladium salts, drying, and burning.

Production Example 1: Catalyst A

(1) Preparation of $Zr(OH)_4$

In 4 L of distilled water was dissolved 1,000 g of commercial zirconium chloride ocathydrate, $ZrOCl_2 \cdot 8H_2O$, and 25% ammonia water, $NH_3$ aq., was added thereto under stirring to precipitate a zirconium hydroxide, $Zr(OH)_4$. Ammonia water was further added dropwise to adjust the pH of the aqueous solution to 9.0. The zirconium hydroxide precipitated was separated by filtration. After the filtration, the solid was sufficiently washed with distilled water and dried at 110°C for a whole day and night to obtain 490 g of the zirconium hydroxide.

(2) Preparation of $SO_4/Zr(OH)_4$

To 4,000 g of 1 N sulfuric acid, 400 g the zirconium hydroxide prepared from zirconium oxychloride was added in the manner described above, followed by stirring for 30 minutes. After the stirring, the mixture was filtered and the solid was dried at 110°C for a whole day and night to obtain 452 g of a zirconium hydroxide containing sulfuric acid radicals, $SO_4/Zr(OH)_4$.

(3) Preparation of $Pd/SO_4/ZrO_2$

To a solution prepared by dissolving 1.8 g of palladium chloride, $PdCl_2$, in hydrochloric acid, 190 g of the zirconium hydroxide to which sulfuric acid radicals had been given was added. The zirconium hydroxide was thus impregnated with the palladium salt. The impregnated zirconium hydroxide was dried at 110°C for a whole day and night, subsequently placed in a muffle furnace, and burned at 600°C for 3 hours to obtain 135 g of zirconia having incorporated palladium and containing sulfuric acid radicals, $Pd/SO_4/ZrO_2$.

Production Example 2: Catalyst B

To an aqueous solution prepared by dissolving 1.9 g of palladium sulfate, $PdSO_4$, 200 g of the zirconium hydroxide containing sulfuric acid radicals described above was added to impregnate it with the palladium salt. Thereafter, drying and burning were conducted in the same manner as in Production Example 1 to obtain 140 g of zirconia having incorporated palladium and containing sulfuric acid radicals, $Pd/SO_4/ZrO_2$.

Production Example 3: Catalyst C

To an aqueous solution prepared by dissolving 1.8 g of palladium nitrate, $Pd(NO_3)_2$, 166 g of the zirconium hydroxide containing sulfuric acid radicals described above was added to impregnate it with the palladium salt. Thereafter, drying and burning were conducted in the same manner as in Production Example 1 to obtain 120 g of zirconia having incorporated palladium and containing sulfuric acid radicals, $Pd/SO_4/ZrO_2$.

Production Example 4: Catalyst D

To an aqueous solution prepared by dissolving 2.0 g of tetraamminepalladium chloride monohydrate, $Pd(NH_3)_4Cl_2 \cdot H_2O$, 139 g of the zirconium hydroxide containing sulfuric acid radicals described above was added to impregnate it with the palladium salt. Thereafter, drying and burning were conducted in the same manner as in Production Example 1 to obtain 100 g of zirconia having incorporated palladium and containing sulfuric acid radicals, $Pd/SO_4/ZrO_2$.

Production Example 5: Catalyst E

To 10 g of water, 1.4 g of palladium chloride, PdCl$_2$ was added, and 27.4 g of ammonia water was added dropwise to the resultant dispersion, followed by ultrasonic application over 10 minutes to dissolve it (this solution is referred to as solution (1)). On the other hand, 7.4 g of ammonia water was added dropwise to a solution of 1.2 g of chloroplatinic acid hexahydrate, H$_2$PtCl$_6$·6H$_2$O, dissolved in 10 g of water, and this mixture was stirred with heating on a 55°C water bath to dissolve it (this solution is referred to as solution (2)). Solution (1) was mixed with solution (2), and 211.2 g of the zirconium hydroxide containing sulfuric acid radicals described above was added to the resultant solution (pH, 11.6) to impregnate it with the palladium salt and platinum salt. Thereafter, drying and burning were conducted in the same manner as in Production Example 1 to obtain 150 g of zirconia having incorporated palladium/ platinum and containing sulfuric acid radicals, Pd/Pt/SO$_4$/ZrO$_2$.

Production Example 6: Catalyst F

A catalyst was produced in the same manner as in Production Example 5, except that the pH of the solution obtained by mixing solution (1) with solution (2) was adjusted to 10.5. Thus, 150 g of zirconia having incorporated palladium/platinum and containing sulfuric acid radicals, Pd/Pt/SO$_4$/ZrO$_2$, was obtained.

Production Example 7: Catalyst G

A catalyst was produced in the same manner as in Production Example 5, except that the pH of the solution obtained by mixing solution (1) with solution (2) was adjusted to 0.8. Thus, 150 g of zirconia having incorporated palladium/platinum and containing sulfuric acid radicals, Pd/Pt/SO$_4$/ZrO$_2$, was obtained.

Production Example 8: Catalyst H

To 20 g of water, 1.5 g of palladium chloride, PdCl$_2$, was added, and 30 mL of concentrated hydrochloric acid was added dropwise thereto, followed by ultrasonic application over 10 minutes to dissolve it (this solution is referred to as solution (3)). On the other hand, 1.6 g of chloroplatinic acid hexahydrate, H$_2$PtCl$_6$·6H$_2$O, was dissolved in 10 g of water (this solution is referred to as solution (4)). Solution (3) was mixed with solution (4), and 172.9 g of the zirconium hydroxide containing sulfuric acid radicals described above was added to the resultant solution to impregnate it with the palladium salt and platinum salt. Thereafter, drying and burning were conducted in the same manner as in Production Example 1 to obtain 123 g of zirconia having incorporated palladium/platinum and containing sulfuric acid radicals, Pd/Pt/SO$_4$/ZrO$_2$.

Production Example 9: Catalyst I

To 20 g of water, 4.1 g of palladium chloride, PdCl$_2$, was added, and 60 mL of concentrated hydrochloric acid was added dropwise thereto, followed by ultrasonic application for 10 minutes to dissolve it (this solution is referred to as solution (5)). On the other hand, 1.6 g of chloroplatinic acid hexahydrate, H$_2$PtCl$_6$·6H$_2$O, was dissolved in 10 g of water (this solution is referred to as solution (6)). Solution (5) was mixed with solution (6), and 174.2 g of the zirconium hydroxide containing sulfuric acid radicals described above was added to the resultant solution to impregnate it with the palladium salt and platinum salt. Thereafter, drying and burning were conducted in the same manner as in Production Example 1 to obtain 124 g of zirconia having incorporated palladium/platinum and containing sulfuric acid radicals, Pd/Pt/SO$_4$/ZrO$_2$.

Production Example 10: Catalyst J

In a muffle furnace, 121 g of a zirconium hydroxide containing sulfuric acid radicals prepared by the method shown in Production Example 1 was heat-treated at 600°C for 3 hours and thereby stabilized to obtain 85 g of zirconia containing sulfuric acid radicals. To a solution prepared by dissolving 1.9 g of palladium chloride, PdCl$_2$, in hydrochloric acid, 85 g of the zirconia containing sulfuric acid radicals was added to impregnate it with the palladium salt. The impregnated zirconia was dried at 110°C for a whole day and night and then burned at 550°C for 2 hours in a muffle furnace to obtain 83 g of zirconia having incorporated palladium and containing sulfuric acid radicals, Pd/SO$_4$/ZrO$_2$.

Production Example 11: Catalyst K

To 112 g of a zirconium hydroxide prepared by the method shown under (1) in Production Example 1, 29 g of commercial ammonium sulfate was added. This mixture was kneaded for 1 hour with a kneader equipped with stirring blades while adding water. The resultant zirconium hydroxide containing sulfuric acid radicals was dried at 110°C for a whole day and night and then stabilized by burning at 600°C for 3 hours in a muffle furnace to obtain 91 g of zirconia containing sulfuric acid radicals. To a solution prepared by dissolving 2.0 g of palladium chloride in hydrochloric acid, 85 g of the zirconia containing sulfuric acid radicals was added to impregnate it with the palladium salt. The impregnated zirconia was dried at 110°C for a whole day and night and then burned at 550°C for 2 hours in a muffle furnace to obtain 89 g of zirconia having incorporated palladium and containing sulfuric acid radicals, $Pd/SO_4/ZrO_2$.

Production Example 12: Catalyst L

To 120 g of a zirconium hydroxide prepared by the method shown under (1) in Production Example 1, 31 g of commercial ammonium sulfate and 1.8 g of tetraamminepalladium chloride monohydrate were added. This mixture was kneaded for 1 hour with a kneader equipped with stirring blades while adding water. The resultant zirconium hydroxide containing sulfuric acid radicals was dried at 110°C for a whole day and night and then stabilized by burning at 600°C for 3 hours in a muffle furnace to obtain 93 g of zirconia having incorporated palladium and containing sulfuric acid radicals, $Pd/SO_4/ZrO_2$.

Production Example 13: Catalyst M

To an aqueous solution prepared by dissolving 33.6 g of nickel sulfate hexahydrate, $NiSO_4 \cdot 6H_2O$, 150 g of a zirconium hydroxide containing sulfuric acid radicals prepared in accordance with (1) and (2) in Production Example 1 was added to impregnate it with the nickel salt. Thereafter, drying and burning were conducted in the same manner as in Production Example 1 to obtain 115 g of zirconia having incorporated nickel and containing sulfuric acid radicals, $Ni/SO_4/ZrO_2$.

Comparative Example: Catalyst N

To an aqueous solution prepared by dissolving 1.5 g of chloroplatinic acid hexahydrate, $H_2PtCl_6 \cdot 6H_2O$, 168 g of the zirconium hydroxide containing sulfuric acid radicals was added to impregnate it with the platinum salt. Thereafter, drying and burning were conducted in the same manner as in Production Example 1 to obtain 119 g of zirconia having incorporated platinum and containing sulfuric acid radicals, $Pt/SO_4/ZrO_2$.

Results of property tests of catalysts A to N are summarized in Table 1. For the measurement of specific surface area was used high-precision automatic gas adsorption apparatus "BELS ORP28", manufactured by Nippon Bel K.K. The sulfur content in a catalyst was determined by burning a sample in an oxygen stream to oxidize the sulfur contained in the sample into $SO_2$, removing the water and dust, and then detecting the $SO_2$ with an infrared absorption detector, e.g., a solid-state type detector. By this analytical method, the sulfur content in a sample can be determined in the concentration range of from 0.001 to 99.99%. As an analyzer, sulfur analyzer SC-132, manufactured by LECO was used.

Elemental analysis for palladium, platinum, and nickel metals was conducted with elemental analyzer "IRIS Advantage RP", manufactured by Thermo Jarrell-Ash. A test sample was prepared by the uniseal method and examined. The procedure of test sample preparation is shown below.

(1) About 0.5 g of a sample is precisely weighed and placed in a uniseal (a crucible for wet decomposition comprising an inner vessel made of Teflon and an outer vessel made of stainless steel), and about 5 mL of water is carefully added.
(2) Aqua regia (hydrochloric acid/nitric acid = 3/1) or hydrochloric acid is added in an amount of 1 mL for palladium or platinum determination or for nickel determination, respectively.
(3) Hydrofluoric acid is added in an amount of 0.5 mL. The cover of the uniseal is set and the sample is dissolved with a drying oven set at 120°C (2 hours).
(4) After cooling, the contents are transferred to a flask (made of polyethylene) having a capacity of 50 mL.
(5) Immediately before examination, 12 mL of 4% boric acid is added and water is added up to the 50-mL indicator to obtain a test sample.

Table 1

| Properties of Catalysts (1) | | | | |
|---|---|---|---|---|
| | Catalyst A | Catalyst B | Catalyst C | Catalyst D |
| Catalyst constitution | $Pd/SO_4/ZrO_2$ | $Pd/SO_4/ZrO_2$ | $Pd/SO_4/ZrO_2$ | $Pd/SO_4/ZrO_2$ |
| Substance incorporated | $PdCl_2$ | $PdSO_4$ | $Pd(NO_3)_2$ | $Pd(NH_3)_4Cl_2$ |
| Burning conditions | $600°C\times3h$ | $600°C\times3h$ | $600°C\times3h$ | $600°C\times3h$ |
| Specific surface area ($m^2$/g) | 134 | 133 | 138.4 | 132.4 |
| Sulfur content (wt%) | 1.93 | 1.7 | 2.01 | 1.73 |
| Metallic element, analytical value (wt%)<br>Pd<br>Pt<br>Ni | 0.55 | 0.36 | 0.33 | 0.52 |
| Ratio between $ZrO_2$ crystal structures<br>Monoclinic/tetragonal | 3.5/96.5 | 3.7/96.3 | 4.1/95.9 | 4.3/95.7 |

Table 1

| Properties of Catalysts (2) | | | |
|---|---|---|---|
| | Catalyst E | Catalyst F | Catalyst G |
| Catalyst constitution | $Pd/Pt/SO_4/ZrO_2$ | $Pd/Pt/SO_4/ZrO_2$ | $Pd/Pt/SO_4/ZrO_2$ |
| Substance incorporated | $PdCl_2\ H_2PtCl_6$ | $PdCl_2\ H_2PtCl_6$ | $PdCl_2\ H_2PtCl_6$ |
| Burning conditions | $600°C\times3h$ | $600°C\times3h$ | $600°C\times3h$ |
| Specific surface area ($m^2$/g) | 119.1 | 113.9 | 103.2 |
| Sulfur content (wt%) | 1.52 | 1.39 | 1.37 |
| Metallic element, analytical value (wt%)<br>Pd<br>Pt<br>Ni | 0.38<br>0.18 | 0.39<br>0.22 | 0.36<br>0.16 |
| Ratio between $ZrO_2$ crystal structures<br>Monoclinic/tetragonal | 4.5/95.5 | 4.6/95.4 | 5.2/94.8 |

Table 1

| Properties of Catalysts (3) | | | |
|---|---|---|---|
| | Catalyst H | Catalyst I | Catalyst J |
| Catalyst constitution | $Pd/Pt/SO_4/ZrO_2$ | $Pd/Pt/SO_4/ZrO_2$ | $Pd/SO_4/ZrO_2$ |
| Substance incorporated | $PdCl_2\ H_2PtCl_6$ | $PdCl_2\ H_2PtCl_6$ | $PdCl_2$ |
| Burning conditions | $600°C\times3h$ | $600°C\times3h$ | $600°C\times3h$ |
| Specific surface area ($m^2$/g) | 149 | 144.9 | 103 |
| Sulfur content (wt%) | 1.96 | 1.9 | 1.64 |
| Metallic element, analytical value (wt%)<br>Pd<br>Pt<br>Ni | 0.52<br>0.39 | 1.5<br>0.39 | 1.0 |

Table 1   (continued)

| Properties of Catalysts (3) | | | |
|---|---|---|---|
| | Catalyst H | Catalyst I | Catalyst J |
| Ratio between $ZrO_2$ crystal structures Monoclinic/tetragonal | 4.0/96.0 | 3.5/96.5 | 3.6/96.4 |

Table 1

| Properties of Catalysts (4) | | | | |
|---|---|---|---|---|
| | Catalyst K | Catalyst L | Catalyst M | Catalyst N |
| Catalyst constitution | $Pd/SO_4/ZrO_2$ | $Pd/SO_4/ZrO_2$ | $Ni/SO_4/ZrO_2$ | $Pt/SO_4/ZrO_2$ |
| Substance incorporated | $PdCl_2$ | $Pd(NH_3)_4Cl_2$ | $NiSO_4$ | $H_2PtCl_6$ |
| Burning conditions | 600°C×3h | 600°C×3h | 750°C×1.5h | 600°C×3h |
| Specific surface area ($m^2$/g) | 134 | 121.5 | 120 | 144.6 |
| Sulfur content (wt%) | 2.11 | 2.04 | 1.74 | 1.64 |
| Metallic element, analytical value (wt%)<br>Pd<br>Pt<br>Ni | 0.99 | 0.58 | 4.8 | 0.35 |
| Ratio between $ZrO_2$ crystal structures Monoclinic/tetragonal | 5.5/94.5 | 4.6/95.4 | 3.6/96.4 | 3.1/96.9 |

Example Desulfurization and Isomerization Reactions of Light Hydrocarbon Oils

A fixed-bed flow-through type reactor having a catalyst packing capacity of from 3 to 100 mL was used to conduct the desulfurization and isomerization of light hydrocarbon oils for evaluating catalysts A to N. The reaction conditions are as follows.

Reaction pressure:

1.47 or 2.96 MPa

Reaction temperature:

185-200°C

LHSV:

2.9 or 5 $h^{-1}$

$H_2$/oil ratio:

2 mol/mol

Feedstock:

Three light naphthas containing organosulfur, i.e., an unwashed naphtha and Merox naphthas (1) and (2), boiling point range, 25-110°C (ASTM distillation); and n-pentane containing a sulfur compound (($C_3H_7)_2S_2$) (sulfur content, about 200-300 ppm by weight).

Properties of the light naphthas are shown in Table 2.

Table 2

| Properties of Light Naphthas | | | |
|---|---|---|---|
| Kind of feedstock oil | Unwashed naphtha | Merox naphtha (1) | Merox naphtha (2) |
| $C_4$ compounds | 4.62 | 1.07 | 2.72 |
| $C_5$ compounds | 48.39 | 51.76 | 51.73 |
| $C_6$ compounds | 42.51 | 42.73 | 37.87 |
| $C_7$ compounds | 4.31 | 4.43 | 7.72 |
| $C_8$ compounds | 0.16 | 0.01 | 0.43 |
| C9 compounds | 0.01 | 0 | 0 |
| Naphthenes | 5.85 | 8.5 | 8.32 |
| Aromatics | 1.21 | 1.36 | 1.53 |
| Sulfur content (ppm) | 438 | 124 | 220 |
| Density (g/cm$^3$, 15°C) | 0.6523 | 0.6558 | 0.6553 |
| Calculated octane number | 68 | 70.3 | 69.9 |

The degrees of isomerization of the light naphthas are shown in Tables 3 and 4, while the degrees of isomerization of the organosulfur compound-containing hydrocarbon oil are shown in Tables 5 and 6. "Degree of isomerization" herein is defined by the following equation.

Degree of isomerization (%)

$$= (\text{wt\% of i-}C_5 \text{ in product oil}) / (\text{total wt\% of all}$$

$$C_5 \text{ compounds in product oil}) \times 100$$

Table 3

| Isomerization of Merox naphtha (I) | | | |
|---|---|---|---|
| Sulfur content in the naphtha S = 124 ppm<br>Boiling point range, 28.1-91.2°C<br>Reaction temperature: 195°C<br>Reaction pressure: 2.96 MPa<br>LHSV: 2.95 h$^{-1}$<br>H$_2$/oil ratio: 2 mol/mol | | | |
| Catalyst | Reaction time (h) | Degree of $C_5$ isomerization (%) | Calculated octane number |
| Catalyst N: Pt/SO$_4$/ZrO$_2$ | 3.3 | 55.2 | 75.0 |
| Catalyst N: Pt/SO$_4$/ZrO$_2$ | 23 | 47.0 | 72.3 |
| Catalyst N: Pt/SO$_4$/ZrO$_2$ | 43 | 41.1 | 70.5 |
| Catalyst A: Pd/SO$_4$/ZrO$_2$ | 5 | 69.7 | 79.2 |
| Catalyst A: Pd/SO$_4$/ZrO$_2$ | 25 | 66.0 | 78.2 |
| Catalyst A: Pd/SO$_4$/ZrO$_2$ | 46 | 65.4 | 78.2 |
| Catalyst A: Pd/SO$_4$/ZrO$_2$ | 142 | 61.9 | 77.1 |

Table 3   (continued)

| Isomerization of Merox naphtha (I) | | | |
|---|---|---|---|
| Catalyst | Reaction time (h) | Degree of $C_5$ isomerization (%) | Calculated octane number |
| Catalyst A: Pd/SO$_4$/ZrO$_2$ | 166 | 62.1 | 77.2 |
| Feedstock | | 41.0 | 70.3 |

Table 4

| Isomerization of Merox naphtha (II) | | | |
|---|---|---|---|
| Sulfur content in the naphtha S = 220 ppm<br>Boiling point range, 26.0-101.2°C<br>Reaction temperature: 195°C<br>Reaction pressure: 2.96 MPa<br>LHSV: 2.9 h$^{-1}$<br>H$_2$/oil ratio: 2 mol/mol | | | |
| Catalyst | Reaction time (h) | Degree of $C_5$ isomerization (%) | Calculated octane number |
| Catalyst A: Pd/SO$_4$/ZrO$_2$ | 5 | 67.3 | 78.7 |
| Catalyst A: Pd/SO$_4$/ZrO$_2$ | 23.5 | 62.2 | 77.3 |
| Catalyst A: Pd/SO$_4$/ZrO$_2$ | 43.5 | 61.2 | 77.0 |
| Catalyst A: Pd/SO$_4$/ZrO$_2$ | 139.5 | 58.2 | 76.0 |
| Catalyst A: Pd/SO$_4$/ZrO$_2$ | 194.5 | 56.2 | 75.4 |
| Catalyst A: Pd/SO$_4$/ZrO$_2$ | 331.5 | 55.6 | 75.1 |
| Feedstock | | 40.8 | 69.9 |

Table 5

| Isomerization of organosulfur compound-containing n-pentane (1) | | |
|---|---|---|
| Feedstock: n-C$_5$ + (n-C$_3$)$_2$S$_2$ (S = 300 ppm)<br>Reaction temperature: 200°C<br>Reaction pressure: 1.47 MPa<br>LHSV: 5 h$^{-1}$<br>H$_2$/oil ratio: 2 mol/mol | | |
| Catalyst | Reaction time (h) | Degree of $C_5$ isomerization (%) |
| Catalyst A: Pd/SO$_4$/ZrO$_2$ PdCl$_2$ | 2.7 | 65.5 |
| | 4.05 | 65.4 |
| | 7.1 | 64.5 |
| Catalyst B: Pd/SO$_4$/ZrO$_2$ PdSO$_4$ | 2 | 66.9 |
| | 5.65 | 66.6 |
| | 7.28 | 65.8 |
| Catalyst C: Pd/SO$_4$/ZrO$_2$ Pd(NO$_3$)$_2$ | 2.5 | 65.9 |
| | 5.5 | 61.5 |
| | 8 | 61.1 |

Table 5 (continued)

| Isomerization of organosulfur compound-containing n-pentane (1) | | |
|---|---|---|
| Catalyst | Reaction time (h) | Degree of $C_5$ isomerization (%) |
| Catalyst D: $Pd/SO_4/ZrO_2$ $Pd(NH_3)_4Cl_2$ | 3.33 | 69.4 |
| | 5.67 | 70.1 |
| | 6.92 | 69.7 |
| Catalyst E: $Pt/Pd/SO_4/ZrO_2$ Pt/Pd=0.18/0.38 | 2.32 | 70.2 |
| | 4.58 | 69.6 |
| | 6.73 | 69.7 |
| Catalyst F: $Pt/Pd/SO_4/ZrO_2$ Pt/Pd=0.22/0.39 | 2.05 | 66.0 |
| | 4.03 | 67.1 |
| | 7.55 | 66.9 |

Table 5

| Isomerization of organosulfur compound-containing n-pentane (1, continued) | | |
|---|---|---|
| Catalyst | Reaction time (h) | Degree of $C_5$ isomerization (%) |
| Catalyst G: $Pt/Pd/SO_4/ZrO_2$ Pt/Pd=0.16/0.36 | 1.82 | 68.8 |
| | 3.92 | 67.5 |
| | 6.58 | 66.6 |
| Catalyst J: $Pd/SO_4/ZrO_2$ $PdCl_2$ | 2.4 | 64.2 |
| | 4.32 | 64.4 |
| | 7.21 | 63.8 |
| Catalyst K: $Pd/SO_4/ZrO_2$ $PdCl_2$ | 2.04 | 67.2 |
| | 4.55 | 66.2 |
| | 6.92 | 66.1 |
| Catalyst L: $Pd/SO_4/ZrO_2$ $Pd(NH_3)_4Cl_2$ | 2.19 | 65.4 |
| | 4.87 | 64.9 |
| | 7.32 | 65.1 |
| Catalyst M: $Ni/SO_4/ZrO_2$ $NiSO_4$ | 3.25 | 60.9 |
| | 5.98 | 61.4 |
| | 8.42 | 57.3 |
| Catalyst N: $Pt/SO_4/ZrO_2 H_2PtCl_6$ | 2.1 | 22.4 |
| | 4.2 | 9.4 |
| | 5.3 | 3.2 |

Table 6

| Isomerization of organosulfur compound-containing n-pentane (2) | | | |
|---|---|---|---|
| Feedstock: n-C$_5$ + EtSMe (S = 200 ppm)<br>Reaction temperature: 200°C<br>Reaction pressure: 2.96 MPa<br>LHSV: 5 h$^{-1}$<br>H$_2$/oil ratio: 2 mol/mol | | | |
| Catalyst | Pt/Pd ratio | Reaction time (h) | Degree of C$_5$ isomerization (%) |
| Catalyst A: Pd/SO$_4$/ZrO$_2$ | 0/0.5 | 2 | 73.2 |
|  |  | 5 | 73.3 |
|  |  | 8 | 73.3 |
| Catalyst H: Pt/Pd/SO$_4$/ZrO$_2$ | 0.39/0.52 | 2 | 72.3 |
|  |  | 5 | 72.4 |
|  |  | 8 | 72.2 |
| Catalyst I: Pt/Pd/SO$_4$/ZrO$_2$ | 0.39/1.5 | 2 | 73.5 |
|  |  | 5 | 73.4 |
|  |  | 8 | 73.4 |
| Catalyst N: Pt/SO$_4$/ZrO$_2$ | 0.35/0 | 2 | 70.8 |
|  |  | 5 | 66.7 |
|  |  | 8 | 41.6 |

Degrees of desulfurization of a hydrocarbon oil containing an organosulfur compound are shown in Table 7.

Table 7

| Desulfurization reaction of thiophene-containing n-hexane | | |
|---|---|---|
| Feedstock: n-C$_6$ + thiophene (S = 500 ppm)<br>Reaction temperature: 200°C<br>Reaction pressure: 1.0 MPa<br>LHSV: 5 h$^{-1}$<br>H$_2$/oil ratio: 1 mol/mol | | |
| Catalyst | Reaction time (h) | Degree of thiophene desulfurization (%) |
| Catalyst A: Pd/SO$_4$/ZrO$_2$ | 4-5 | 98.2 |
| Catalyst H: Pt/Pd/SO$_4$/ZrO$_2$ | 4-5 | 97.5 |
| Catalyst I: Pt/Pd/SO$_4$/ZrO$_2$ | 4-5 | 97.9 |
| Catalyst J: Pd/SO$_4$/ZrO$_2$ | 4-5 | 88.9 |
| Catalyst M: Ni/SO$_4$/ZrO$_2$ | 4-5 | 90.2 |
| Catalyst N: Pt/SO$_4$/ZrO$_2$ | 4-5 | 33.5 |

It is apparent from the data in Example given above that when catalysts A to M according to the present invention are used, they can exhibit such catalytic performance that 60% or more of the organosulfur compound in the reaction product oil is converted to hydrogen sulfide and removed. The data further show that when the catalysts are used to conduct the isomerization reaction of a light hydrocarbon oil containing an organosulfur compound in a high concentration, the isomerization performance of the catalysts can be maintained for a prolonged period of time. In contrast, in the case where catalyst N of Comparative Example is used in the isomerization reaction of a light hydrocarbon oil containing an organosulfur compound in a high concentration, the degree of isomerization decreases with the lapse of time due to the low desulfurization performance, making it impossible to constitute a practical process.

INDUSTRIAL APPLICABILITY

The catalyst of the present invention not only has high catalytic activity in isomerization reactions of light hydrocarbon oils, but also has sulfur resistance and is usable for hydrodesulfurizing organosulfur compounds under isomerization reaction conditions. Because of this, when it is used in isomerizing a light hydrocarbon oil containing an organosulfur compound, there is no need of conducting the desulfurization treatment which has been a pretreatment indispensable to conventional techniques. Specifically, an isomerization process can be accomplished by merely packing this catalyst into a conventional fixed-bed catalytic reactor for isomerization and passing a light hydrocarbon oil containing organosulfur compounds through the reactor together with hydrogen. Consequently, according to the present invention, the hydrodesulfurization and isomerization of a light hydrocarbon oil can be carried out with simpler facilities than conventional ones at reduced running cost.

**Claims**

1. A catalyst composition for the hydrodesulfurization and isomerization of a light hydrocarbon oil, comprising a support comprising zirconium oxide or a zirconium hydroxide; from 1 to 3 wt% sulfuric acid radicals in terms of a sulfur amount based on the total weight of the catalyst composition; and (1) from 0.05 to 10 wt% palladium, (2) from 0.05 to 10 wt% palladium and from 0.05 to 10 wt% platinum, or (3) from 0.05 to 10 wt% nickel, based on the total weight of the catalyst composition; and having a specific surface area of from 50 to 150 m$^2$/g after stabilization by burning at a temperature of from 550 to 800°C.

2. The catalyst according to claim 1, wherein the ratio of the platinum to the palladium (Pt/Pd atomic ratio) is from 0.1 to 4.

3. A process for producing the catalyst composition of claim 1, comprising:

   (1) treating a zirconium hydroxide with a substance giving sulfuric acid radicals; impregnating the resultant treated material with a palladium compound, a palladium compound and a platinum compound, or a nickel compound; and burning the impregnated material at a temperature of from 550 to 800°C;
   (2) treating a zirconium hydroxide with a substance giving sulfuric acid radicals, burning the treated material at a temperature of from 550 to 800°C; impregnating the resultant burned material with a palladium compound, a palladium compound and a platinum compound, or a nickel compound; and burning the impregnated material at a temperature of from 300 to 700°C;
   (3) kneading a zirconium hydroxide, a substance giving sulfuric acid radicals, and a palladium compound, a palladium compound and a platinum compound, or a nickel compound; and burning the mixture at a temperature of from 550 to 800°C; or
   (4) kneading a zirconium hydroxide and a substance giving sulfuric acid radicals; burning the mixture at a temperature of from 550 to 800°C; impregnating the resultant burned material with a palladium compound, a palladium compound and a platinum compound, or a nickel compound; and burning the impregnated material at a temperature of from 300 to 700°C.

4. A method for the hydrodesulfurization and isomerization of a light hydrocarbon oil, comprising bringing a light hydrocarbon oil having a sulfur content of 700 ppm by weight or lower and hydrogen into contact with the catalyst composition of claim 1 under reaction conditions of a temperature of from 140 to 400°C, a pressure of from 1.0 to 4.5 MPa, an LHSV of from 1.0 to 10 h$^{-1}$, and an H$_2$/oil ratio of from 1 to 3 mol/mol.

5. The method according to claim 4, wherein the ratio of the platinum to the palladium (Pt/Pd atomic ratio) in the catalyst composition is from 0.1 to 4.

6. Use of the catalyst composition of claim 1 or 2 for the hydrodesulfurization and isomerization of a light hydrocarbon oil.

## INTERNATIONAL SEARCH REPORT

| International application No. |
|---|
| PCT/JP99/07082 |

A. CLASSIFICATION OF SUBJECT MATTER
    Int.Cl⁷   B01J 27/053, C10G 69/08, 35/085, 45/10

According to International Patent Classification (IPC) or to both national classification and IPC

B. FIELDS SEARCHED

Minimum documentation searched (classification system followed by classification symbols)
    Int.Cl⁷   B01J 21/00-38/74, C10G 1/00-75/04, C07B 61/00

Documentation searched other than minimum documentation to the extent that such documents are included in the fields searched
    Jitsuyo Shinan Koho          1926-1996     Toroku Jitsuyo Shinan Koho  1994-2000
    Kokai Jitsuyo Shinan Koho    1971-2000     Jitsuyo Shinan Keisai Koho  1996-2000

Electronic data base consulted during the international search (name of data base and, where practicable, search terms used)
    WPI/L(QUESTEL)   ISOMERISATION AND HIDROGENATION AND (LIGHT AND HYDROCARBON
    AND OIL)
    JICST(JOIS)   ((Suisoka * Datsuryu * Iseika) * Shokubai) * Zirconi? (in Japanese)

C. DOCUMENTS CONSIDERED TO BE RELEVANT

| Category* | Citation of document, with indication, where appropriate, of the relevant passages | Relevant to claim No. |
|---|---|---|
| A | JP, 2-68144, A (Shin Daikyowa Sekiyu Kagaku K.K.), 07 March, 1990 (07.03.90), Claims; page 3, upper right column, lines 14- 20 (Family: none) | 1-6 |
| A | JP, 6-210176, A (NIPPON OIL COMPANY, LTD.), 02 August, 1994 (02.08.94), Claims   (Family: none) | 1-6 |
| A | JP, 9-103681, A (JAPAN ENERGY CORPORATION), 22 April, 1997 (22.04.97), Claims   (Family: none) | 1-6 |
| A | JP, 9-290160, A (Sekiyu Sangyo Kasseika Center, et al.), 11 November, 1997 (11.11.97), Par. Nos. 0027, 0031, 0032; Examples   (Family: none) | 1-6 |
| P,A | JP, 11-181448, A (Cosmo Research Institute, et al.), 06 July, 1999 (06.07.99), Claims & WO, 99/33937, A1 | 1-6 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 March, 2000 (14.03.00) | 28 March, 2000 (28.03.00) |

| Name and mailing address of the ISA/ | Authorized officer |
|---|---|
| Japanese Patent Office | |
| Facsimile No. | Telephone No. |

Form PCT/ISA/210 (second sheet) (July 1992)